# EUROPEAN PATENT APPLICATION

(11) **EP 2 725 395 A1**
(43) Date of publication of application: **30.04.2014**
(21) Application number: 12802747.1
(22) Date of filing: 07.06.2012
(51) Int. Cl.: G02B 5/26, B32B 7/02, G02B 5/08, G02B 5/28

(54) **OPTICAL REFLECTIVE FILM**

(30) Priority: 24.06.2011 JP 2011140183
(71) Applicant: Konica Minolta, Inc., Tokyo 100-7015 (JP)
(72) Inventor: KOKEGUCHI, Noriyuki, Chiyoda-ku Tokyo 100 7015 (JP)
(74) Representative: Gille Hrabal
(86) International application number: PCT/JP2012/064717
(87) International publication number: WO 2012/176627

(57) **Abstract**

The object is to obtain an optical reflective film having both productivity and optical characteristic which achieves a lower production cost and a larger area, and reduces unevenness in the reflectivity of visible light regions. An optical reflective film including at least one unit in which a high refractive index layer and a low refractive index layer are alternately laminated on a film support, at least one of the high refractive index layer and the low refractive index layer including a water-soluble polymer and a metal oxide particle, wherein a mixed region of the high refractive index layer and the low refractive index layer is formedbetween the high refractive index layer and the low refractive index layer by a simultaneous multilayer coating of the high refractive index layer and the low refractive index layer, and the optical reflective film has at least one region in visible light wavelength regions and 30% or more and 100% or less of a mean reflectivity thereof.

## Description

### TECHNICAL FIELD

The current invention relates to an optical reflective film formed by alternately laminating layers having a different refractive index in a simultaneous multilayer coating, which can be preferably used as a metallic luster film, a visible light colored film, and a heat barrier film.

### BACKGROUND ART

It is known that a film in which layers having a different refractive index are alternately laminated can be designed so as to reflect visible lights by controlling an optical film thickness.

Patent Literature 1 discloses that a three-layer (an O diffusion layer) structure can be realized by sputtering two-layered film formation, when an SiO₂ layer and an Si layer are alternately formed by sputtering, and then the resulting film is annealed to diffuse oxygen (O), thereby forming a mixed layer. In a production method using sputtering, the production cost can be surely reduced because a three-layered film formation can be reduced to a two-layered film formation. The formation of two sputtered layers in a larger area, however, is higher in cost compared to a simultaneous multilayer coating.

Patent Literature 2 discloses that a film having a peak of reflectivity in a wavelength bandwidth of 400 to 1400 nm can be obtained by forming an alternately laminated film from a specific polyester component A and a specific polyester component B whose refractive indexes are different from others by melt extrusion, followed by biaxial stretching thereof. According to this method, (1) because a thin film having a thickness of about dozens nm per layer is necessary, a stretching ratio becomes larger and unevenness in film thickness occurs, and (2) the unevenness in film thickness greatly influences on the unevenness in the reflectivity in visible light region on a sample surface because of no mixed region between layers, thus resulting in the insufficient optical characteristic.

Patent Literature 3 discloses a method wherein coating liquid for a high refractive index layer in which a thermosetting silicone resin or a ultraviolet curable acrylic resin including fine particles of a metal oxide or a metal compound is dispersed in an organic solvent is coated on a base material in a wet-coating manner using a bar coater to form a transparent laminate. According to the disclosed method, however, the optical characteristic is insufficient, because there is no mixed region between layers, as the same as above.

### Citation List

### Patent Literature

Patent Literature 1: JP 4678268 B1
Patent Literature 2: JP 2010-184493 A
Patent Literature 3: JP 8-110401 A

### SUMMARY OF INVENTION

### Technical Problem

The object of the current invention is to obtain an optical reflective film having both productivity and optical characteristic which achieves a lower production cost and a larger area, and reduces the unevenness in the reflectivity of visible light regions.

### Solution to Problem

The object of the current invention can be achieved by ways described below.

1. An optical reflective film including at least one unit in which a high refractive index layer and a low refractive index layer are alternately laminated on a film support, at least one of the high refractive index layer and the low refractive index layer including a water-soluble polymer and a metal oxide particles, wherein a mixed region of the high refractive index layer and the low refractive index layer is formed between the high refractive index layer and the low refractive index layer by a simultaneous multilayer coating of the high refractive index layer and the low refractive index layer, and the optical reflective film has at least one region in visible light wavelength regions and 30% or more and 100% or less of a mean reflectivity thereof .

2. The optical reflective film as described in 1 above, wherein at least one of the high refractive index layer and the low refractive index layer includes a layer of a dry film thickness of 600 nm or more and 1200 nm or less.

3. The optical reflective film as described in 1 or 2 above, wherein the optical reflective film has two or more units in which the high refractive index layer and the low refractive index layer are alternately laminated and which have an optical film thickness different from others.

4. The optical reflective film as described in 3 above, wherein the two or more units have one or more units which mainly reflect a visible light and one or more units which mainly reflect a near infrared light.

5. The optical reflective film as described in any one of 1 to 4 above, wherein the water-soluble polymer is at least one compound selected from the group consisting of gelatin, polyvinyl alcohol and polysaccharide thickeners.

6. The optical reflective film as described in any one of 1 to 5 above, wherein the metal oxide particle is rutile type titanium dioxide.

7. The optical reflective film as claimed in any one of Claims 1 to 6, wherein the refractive index is continuously changed in the mixed region.

### Advantageous Effects of Invention

An optical reflective film having both productivity and optical characteristic which achieves a lower production cost and a larger area, and reduces unevenness in the reflectivity of visible light regions can be obtained by the current invention.

### BRIEF DESCRIPTION OF DRAWINGS

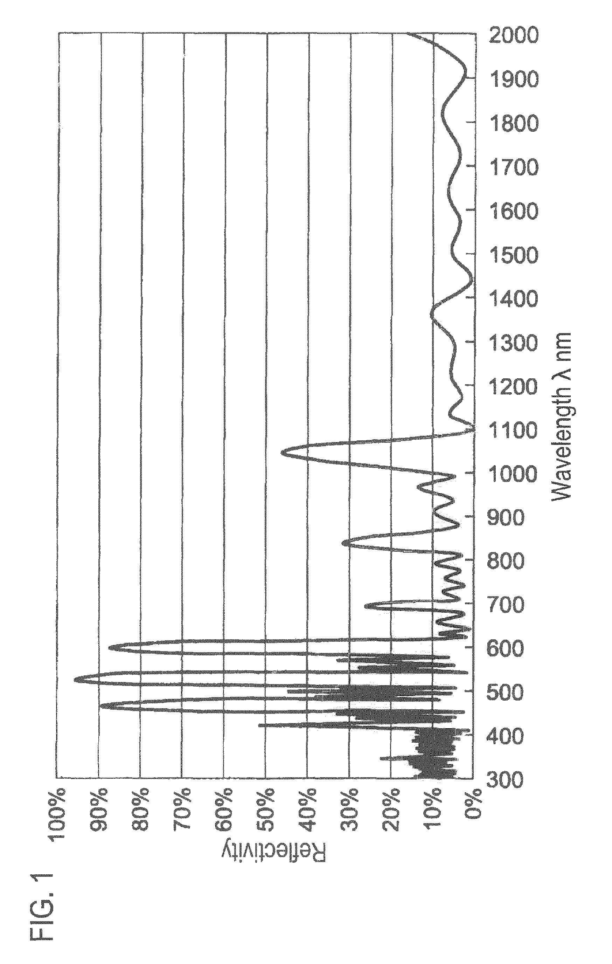

Fig. 1 is a view showing one example of a reflection characteristic of an optical reflective film of the invention.

### DESCRIPTION OF EMBODIMENTS

The current invention will be explained below.

It is known that layers having a different refractive index are alternately laminated and an optical film thickness is controlled, whereby the film can be designed so as to reflect visible lights and infrared lights.

When the layers having a different refractive index are merely alternately laminated, however, high-order reflections occur in wavelength regions other than wavelength regions where reflection is desired to be obtained, and the resulting filmmay sometimes have a reflection characteristic which is off from the desired reflection characteristic.

In order to prevent this disadvantage, for example, in a case in which an infrared reflection film is formed from alternately laminated units of a high refractive index layer A (a refractive index nA) and a low refractive index layer C (a refractive index nC), a polymer film laminate having alternately laminated units is.known in which layers B having a refractive index which is different from those of the above layers and has a relationship in the refractive index of nB = (nA·nC)^{0.5} are alternately laminated together with the high refractive index layer A and the low refractive index layer C in an order of ABCB, and a ratio of an optical film thicknesses in each layer is set at A1/3, B1/6 and C1/3 (for example, JP 3067863 B, and the like).

The current invention is characterized in that the structure described above is basically adopted, and at the same time a region (a mixed region) in which both of a high refractive index material in the high refractive index layer and a low refractive index material in the low refractive index layer exist is formed, i.e., a mixed region in which the high refractive index layer and the low refractive index layer are mixed is formed between the high refractive index layer (the high refractive index region) and the low refractive index layer (the low refractive index region).

The optical reflective film of the current invention is, accordingly, characterized by forming a mixed region of a high refractive index layer and a low refractive index layer between the high refractive index layer and the low refractive index layer by a simultaneous multilayer coating, in the optical reflective film including at least one unit (hereinafter which may sometimes be referred to as "alternately laminated unit") in which the high refractive index layer and the low refractive index layer are alternately laminated on a film support (for example, a resin film), at least one of the high refractive index layer and the low refractive index layer including a water-soluble polymer and a metal oxide particles. When the mixed region is formed by the simultaneous multilayer coating, the necessary number of layers at coating can be reduced by 1/2 compared to the method in which the layer B is provided separately, and thus the cost can be significantly reduced.

When a coating liquid for the high refractive index layer and a coating liquid for the low refractive index layer are simultaneously coated in multilayer , components in the coating liquid (the high refractive index material and the low refractive index material) are mixed together until they are set; as a result, the mixed region in which a ratio of the high refractive index material and the low refractive index material is continuously changed is formed at the interface between them. In one embodiment of the present invention, therefore, the refractive index is continuously changed in the mixed region.

In this manner, when a coating liquid A for the high refractive index layer (the refractive index of nA) and a coating liquid C for the low refractive index layer (the refractive index of nC) are subjected to the simultaneous multilayer coating to form the alternate laminate, as described above, the region (which corresponds to the layer B described above) in which the refractive index in the region where the layers are mixed (the mixed region) is continuously changed so as to almost satisfy the relationship of nB = (nA·nC)^{0.5} on average.

A profile of the refractive index in the film thickness direction in the mixed regions are preferably a continuous refractive index profile in which a position of a refractive index to the maximum refractive index being the maximum refractive index -Δn/3, wherein Δn = the maximum refractive index - the minimum refractive index, is in a range of 0.9/3 to 1.1/3 from the maximum refractive index point to a width (a layer thickness) of the maximum refractive index to the minimum refractive index, and a position of a refractive index to the minimum refractive index being the minimum refractive index + Δn/3 is in a range of 0.9/3 to 1.1/3 from the minimum refractive index point to the width (the layer thickness) of the maximum refractive index to the minimum refractive index, in the structure in which the layers are mixed and the refractive index is alternately and continuously changed.

When the refractive index is continuously changed as above, the resulting structure corresponds to the alternately laminated structure as described above, and, at the same time, when the refractive index is not changed in stepwise but is changed continuously and smoothly, reflection in a sideband region near to a reflect wavelength region of a main reflect band can be inhibited, and an optical reflective film having a high robustness, which is the optical reflective characteristic, can be obtained, even if the film thickness varies during the production process. It is preferable that the profile of the refractive index shows a sine curve in the mixed region.

As described above, the alternately laminated unit in the current invention does not have a structure in which the high refractive index layer A and the low refractive index layer C, and further the layer B, which has a middle refractive index having roughly the relationship of nB = (nA·nC)^{0.5}, are clearly alternately laminated in the order of ABCB, but instead has an alternate laminate with a structure in which the refractive index is continuously changed from the high refractive index layer (the high refraction region) to the low refraction region in the mixed region by the simultaneous lamination of the coating liquid for the high refractive index layer and the coating liquid for the low refractive index layer. In the current invention, the state in which the refractive index is continuously changed can be evaluated, for example, by observation of a metal oxide concentration profile described below.

In the profile of the refractive index in the film thickness direction, it is preferable that (Δn/16) ≤ ΔS ≤ (Δn/2) is satisfied wherein ΔS is the minimum value of a difference in the refractive index in a given T/4 section which is obtained by dividing a width (a layer thickness; a dry film thickness) T from the maximum refractive index to the minimum refractive index into four sections (T/4). Here, Δn refers to a difference between the maximum refractive index and the minimum refractive index. When the layer has a continuous refractive index, ΔS has a difference in the refractive index which is equal to or more than a pre-determined value (Δn/16). When the difference is Δn/2 in the all T/4 sections, the refractive index is changed linearly.

When the alternately laminate unit having the structure in which the refractive index is continuously changed is adopted as described above, the mean reflectivity and further a mean visible light reflectivity described below can be improved and the unevenness in the reflectivity can be reduced.

The structure in the current invention can be obtained by the simultaneous multilayer coating of the coating liquid for the high refractive index layer and the coating liquid for the low refractive index layer, the productivity is high, the production in a large area can be performed, the robustness, which is the optical reflective characteristic, is high even if the film thickness varies, and in particular an optical refractive film having the excellent optical characteristic in the visible light region, which is required to have a thin film thickness of about dozens nm and is easily influenced by the change in the film thickness, can be obtained.

In the laminated unit in which the mixed region of the high refractive index layer and the low refractive index layer is formed by the simultaneous multilayer coating, the refractive index profile can be found by measuring concentration profiles of the high refractive index material and the low refractive index material in the film thickness direction of the laminated film, i.e., the concentration profiles of the materials (the high refractive index material and the low refractive index material) in the film thickness direction of the laminated film can be converted into the refractive index using a composition.

Specifically, when metal oxides are used as the high refractive index material and the low refractive index material, the refractive index profile can be found by measuring a metal oxide concentration profile in the film thickness direction of the laminated film.

For example, in the alternately laminated unit in which the mixed region of the high refractive index layer and the low refractive index layer is formed by the simultaneous multilayer coating, when the metal oxides are used as the high refractive index material and the low refractive index material, for example, when the high refractive index layer includes titanium oxide as the high refractive index material and the low refractive index layer includes silicon oxide as the low refractive index material, the refraction profile can be found by measuring a metal oxide concentration profile in the film thickness direction of the laminated film. Then, the metal oxide concentration profile in the film thickness direction of the laminated film can be converted into a refractive index using the composition.

The metal oxide concentration profile of the laminated film can be observed by etching the film in the deep direction from the surface according to a sputtering manner, and sputtering it at a speed of 0.5 nm/minute using an XPS surface analyzer defining the outermost surface as 0 nm to measure an atomic composition ratio.

The XPS surface analyzer is not particularly limited, and any kind of analyzer can be used. In the current invention, ESCALAB-200R, manufactured by VG Scientific Inc., is used. Mg is used as an X-ray anode, and the measurement is performed at an output of 600 W (an accelerating voltage of 15 kV and an emission current of 40 mA).

### [Design of Film]

In the current invention, a difference in the refractive index of at least adjacent two layers (the high refractive index layer and the low refractive index layer) is preferably 0.2 or more, more preferably 0.3 or more. The upper limit is not particularly limited, and it is generally 1.4 or less. Although the alternately laminated unit in the current invention has the mixed region at the boundary between the high refractive index layer and the low refractive index layer, the explanation is made supposing that the unit is formed of the two layers for convenience, because the unit is formed by the simultaneous multilayer coating of the high refractive index layer and the low refractive index layer. Here, the difference in the refractive index between the high refractive index layer and the low refractive index layer is actually a difference between the maximum refractive index point in the high refraction region and the minimum refractive index point in the low refractive index region.

In the following explanation, the explanation is also made supposing that the unit is formed of the two layers for convenience.

The reflection at the interface between the adjacent layers depends on a refractive index ratio between the layers, and thus the larger the refractive index ratio, the higher the reflectivity. In addition, when, in a monolayer film, a difference in an optical path between a reflected light at a surface of the layer and a reflected light at a bottom of the layer is adjusted to a relationship expressed by n·d = wavelength/4, the reflected lights can be controlled so as to enhance each other due to a phase difference, thus resulting in the improved reflectivity. Here, n shows a refractive index, d shows a physical film thickness of the layer, and n·d shows an optical film thickness. The reflection can be controlled by utilizing the difference in the optical path. When a reflecting central wavelength is set, a refractive index and a film thickness in each layer are controlled by utilizing the relationship described above, and reflections of the visible light and the near infrared light are controlled, i.e., a reflectivity of a specific wavelength region is increased by a refractive index in each layer, a film thickness in each layer, or a way to laminate layers.

The current invention is characterized by forming a region having a mean reflectivity of 30% or more and 100% or less in at least one visible light wavelength region. The mean reflectivity is preferably from 40 to 100%, more preferably from 50 to 100%. The structure can be obtained by controlling the refractive index and the physical film thickness of each layer forming the alternately laminated unit, as described above.

The mean reflectivity can be measured by attaching a 5° reflection unit to a spectrophotometer (U-4000 Model manufactured by Hitachi, Ltd.), measuring a reflectivity at (wavelength 2 - wavelength 1) /2 + 1 points at a 2 nm interval in a wavelength region from wavelength 1 to wavelength 2 on a surface of an optical reflective layer as a surface to be measured, and dividing the total value of the obtained reflectivity by (wavelength 2 - wavelength 1)/2 + 1.

A mean reflectivity in a case where a wavelength 1 is 400 nm and a wave length 2 is 700 nm, i.e., a mean reflectivity of the whole region of the visible light wavelength (from 400 to 700 nm) is equal to the following mean visible light reflectivity.

The mean visible light reflectivity is measured by attaching a 5° reflection unit to a spectrophotometer (U-4000 Model manufactured by Hitachi, Ltd.), measuring a reflectivity at 151 points in a range from 400 to 700 nm at a 2 nm interval on a surface of an optical reflective layer as a surface to be measured, and dividing the total value of the reflectivity obtained by 151.

In the optical reflective film of the current invention, the high refractive index layer has a refractive index of preferably 1.70 to 2.50, more preferably 1.80 to 2.20. The low refractive index layer has a refractive index of preferably 1.10 to 1.60, more preferably 1.30 to 1.55. The preferable film thickness of each refractive index layer is generally from 25 to 300 nm per layer, more preferably from 50 to 130 nm, according to the formula: n·d = wavelength/4 described above. More specifically, the preferable film thickness in the visible light reflection is generally from 30 nm to 130 nm per layer, more preferably from 50 nm to 85 nm according to the formula: n·d= wavelength/4 described above. The preferable film thickness in the near infrared light reflection is from 80 to 300 nm per layer, more preferably from 85 to 170 nm, even more preferably from 90 to 130 nm according to the formula: n·d = wavelength/4 described above.

In the alternately laminated unit in the current invention, a thick film layer having a film thickness of 600 nm to 1200 nm can be preferably used for any one layer. In one embodiment of the current invention, therefore, at least one of the high refractive index layer and the low refractive index layer includes the layer of a dry film thickness of 600 to 1200 nm. More preferably, only one of the high refractive index layer and the low refractive index layer includes the layer of a dry film thickness of 600 to 1200 nm, because the handling is performed more easily when the total dry filmthickness is made thinner; evenmore preferably, the low refractive index layer includes the layer of a dry film thickness of 600 to 1200 nm, for widening a band width of a light reflection band in the visible light region, whereby efficient visible light reflection is performed. This thick film layer has effects in which (1) a wavelength region to be reflected can be made broader, (2) when it is used as an adjacent layer to the support, the adhesion to the support can be improved, and (3) the thick film can exhibit a stress relaxation function, and physical properties of a film to which a laminated film is attached can be improved. The dry film thickness is more preferably from 700 nm to 1000 nm.

In the alternately laminated unit, when at least one of the high refractive index layer and the low refractive index layer, which form the alternately laminated unit, includes the thick film layer, layers other than the thick film layer preferably have a film thickness obtained according to the formula: n·d = wavelength/4 described above.

In the current invention, multiple alternately laminated units may be used. One embodiment of the current invention, accordingly, has two or more units in which the high refractive index layer and the low refractive index layer are alternately laminated, which have an optical film thickness different from others. The "units having an optical film thickness different from others" means that an optical film thickness of a layer forming one alternately laminated unit is different from an optical film thickness forming another alternately laminated unit. Specifically, it means that (1) an optical film thickness of a high refractive index layer forming one alternately laminated unit is different from an optical film thickness of a high refractive index layer forming another alternately laminated unit; (2) an optical film thickness of a low refractive index layer forming one alternately laminated unit is different from an optical film thickness of a low refractive index layer forming another alternately laminated unit; or (3) optical film thicknesses of a high refractive index layer and a low refractive index layer forming one alternately laminated unit are respectively different from optical film thicknesses of a high refractive index layer and a low refractive index layer forming another alternately laminated unit. The optical film thickness (the product n·d of the refractive index n and the physical film thickness d) can be controlled by changing materials (at least one of the high refractive indexmaterial and the low refractive index material) of the layers (at least one of the high refractive index layer and the low refractive index layer) forming the alternately laminated unit and/or a film thickness. When the optical film thickness per unit is changed, effects in which (1) a wavelength region to be reflected can be made broader; (2) an edge of a band can be steepened; (3) a ripple can be reduced; (4) a higher-order reflection can be inhibited; (5) a band shift can be reduced by change of an angle of incidence; (6) change of an optical reflective property caused by difference in polarization can be inhibited can be usefully obtained. In particular, in (1), a heat barrier film can be formed completely in reflection mode by laminating a visible light reflected unit and a near infrared light reflected unit, without using a light absorber, and thus there are great advantages in a production cost, and prevention of generation of cracks caused by heat because of no heat absorption.

The optical reflective film of the current invention is formed of at least one alternately laminated unit of the high refractive index layer and the low refractive index, and has preferably a film thickness ratio ∑d1/∑d2 of 1.05 or more and 1.80 or less, in which a position of n/2, i.e., a position of 1/2 of the total number of the layers (a boundary region) wherein n shows the total number of the high refractive index layers and the low refractive index layers in the optical reflective film is defined as the standard position, and ∑d1 shows a total film thickness of structural layers disposed on a base material side up to the standard position (which may sometimes be referred to as "lower layer part region") and ∑d2 shows a total film thickness of structural layers disposed from the standard position to the outermost surface (which may sometimes be referred to as "upper layer part region").

When the total number n of the layers is an even number, a boundary region between the lower layer part region from layer 1 to layer n/2 and the upper layer part region from layer n/2 + 1 to layer n is an interface between the layer n/2 and the layer n/2 + 1. When the total number n of the layers is an odd number, a layer corresponding the boundary region (n + 1/2) is defined as the standard, and a total film thickness of structural layers disposed on the lower layer side of the layer corresponding to the boundary region (n + 1/2) up to the base material, provided that the layer corresponding to the boundary region (n + 1/2) is excluded, is defined as ∑d1 and a total film thickness of structural layers disposed on the upper layer side of the layer corresponding to the boundary region (n + 1/2) up to the outermost layer, provided that the layer corresponding to the boundary region (n + 1/2) is excluded, is defined as ∑d2.

### [High Refractive Index Layer and Low Refractive Index Layer]

The high refractive index layer and the low refractive index layer are respectively formed from the high refractive index material and the low refractive index material, and if necessary theymay include a water-soluble polymer as a binder, a curing agent, an amino acid, and various additives described below. The high refractive index material and the low refractive index material may include metal oxide particles, metal fine particles, high refractive index polymers, low refractive index polymers. In some cases, the water-soluble polymer may be used as the high refractive index material or the low refractive index material.

In the current invention, at least one of the high refractive index layer and the low refractive index layer includes the water-soluble polymer and the metal oxide particles. Both of the high refractive index layer and the low refractive index layer may include the water-soluble polymer and the metal oxide particles. Alternatively, only one of the high refractive index layer and the low refractive index layer may include the water-soluble polymer and the metal oxide particles. In the latter case, the other layer may include the water-soluble polymer but does not include the metal oxide particles, or may include another known compound having a different refractive index.

### [Water-Soluble Polymer]

In the refractive index layers (the low refractive index layer and the high refractive index layer) in the current invention, a layer coating liquid for each layer is prepared and lamination is performed by the simultaneous lamination, and thus at least one water-soluble polymer selected from the group consisting of synthetic polymers such as polyvinyl alcohol, gelatin and polysaccharide thickeners may be used as a binder. It is particularly preferable to use the gelatin.

In the present specification, "water-soluble polymer" refers to polymer which has a mass of an insoluble matter which is filtered off through a G2 glass filter (the maximum pore size of 40 to 50 µm) of 50% by mass or less of mass of the water-soluble polymer added, when the water-soluble polymer is dissolved in water at a temperature at which it is most dissolved in water in a concentration of 0.5% by mass.

The water-soluble polymer has a weight mean molecular weight of preferably 1,000 or more and 200,000 or less, more preferably 2, 000 or more and 150, 000 or less, even more preferably 3,000 or more and 40,000 or less. In the present specification, a value measured using a gel permeation chromatography (GPC) is adopted as the weight mean molecular weight.

### (Synthetic Polymer)

Synthetic polymers applicable for the current invention may include, for example, polyvinyl alcohols, polyvinylpyrrolidones, acrylic resins such as polyacrylic acid, acrylic acid-acrylonitrile copolymers, potassium acrylate-acrylonitrile copolymers, vinyl acetate-acrylic acid ester copolymers and acrylic acid-acrylic acid ester copolymers; styrene acrylic acid resins such as styrene-acrylic acid copolymers, styrene-methacrylic acid copolymers, styrene-methacrylic acid-acrylic acid ester copolymers, styrene-α-methyl styrene-acrylic acid copolymers, and styrene-α-methyl styrene-acrylic acid-acrylic acid ester copolymers; styrene-sodium styrenesulfonate copolymers, styrene-2-hydroxyethyl acrylate copolymers, styrene-2-hydroxyethyl acrylate-potassium styrenesulfonate copolymers, styrene-maleic acid copolymers, styrene-maleic acid anhydride copolymers, vinylnaphthalene-acrylic acid copolymers, vinylnaphthalene-maleic acid copolymers, vinyl acetate copolymers such as vinyl acetate-maleic acid ester copolymers, vinyl acetate-crotonic acid copolymers and vinyl acetate-acrylic acid copolymers, and salts thereof. Of these, particularly preferable examples may include polyvinyl alcohol, polyvinylpyrrolidones, and copolymers including the same.

The polyvinyl alcohol, which is preferably used in the current invention, may include, in addition to usual polyvinyl alcohol, obtained by hydrolysis of polyvinyl acetate, modified polyvinyl alcohols such as polyvinyl alcohol whose ends are cation-modified and anion-modified polyvinyl alcohol having an anionic group.

The polyvinyl alcohol, obtained by the hydrolysis of vinyl acetate, has a mean degree of polymerization of preferably 1,000 or more, and polyvinyl alcohol having a mean degree of polymerization of 1,500 to 5,000 is particularly preferably used. A degree of saponification is preferably from 70 to 100%, more preferably from 80 to 99.5%.

The cation-modified polyvinyl alcohol is an polyvinyl alcohol having a primary to tertiary amino group or a quaternary ammonium group in the main chain or side chain of the polyvinyl alcohol, as described in, for example, JP 61-10483 A, which can be obtained by saponifying a copolymer of an ethylenically unsaturated monomer having a cationic group and vinyl acetate.

The ethylenically unsaturated monomer having a cationic group may include, for example, trimethyl-(2-acrylamide-2,2-dimethylethyl)ammonium chloride, trimethyl-(3-acrylamide-3,3-dimethylpropyl)ammonium chloride, N-vinylimidazole, N-vinyl-2-methylimidazole, N-(3-dimethylaminopropyl)methacrylamide, hydroxyethyl trimethylammonium chloride, trimethyl-(2-methacrylamidepropyl)ammonium chloride, N-(1,1-dimethyl-3-dimethylaminopropyl)acrylamide. A ratio of the monomers having the cation-modified group in the cation-modified polyvinyl alcohol is from 0.1 to 10% by mole to the vinyl acetate, more preferably from 0.2 to 5% by mole.

The anion-modified polyvinyl alcohol may include, for example, polyvinyl alcohols having an anionic group as described in JP 1-206088 A, copolymers of vinyl alcohol and a vinyl compound having a water-soluble group as described in JP 61-237681 A and JP 63-307979 A, and modified polyvinyl alcohols having a water-soluble group as described in JP 7-285265 A.

A nonion-modified polyvinyl alcohol may include, for example, polyvinyl alcohol derivatives in which a polyalkylene oxide groups are added to a part of vinyl alcohols as described in JP 7-9758 A, block-copolymers of a vinyl compound having a hydrophobic group and vinyl alcohol as described in JP 8-25795 A. Two or more kinds of polyvinyl alcohols which have a different degree of polymerization or which is differently modified may be together used.

A content of the synthetic polymer included in the refractive index layers (the low refractive index layer and the high refractive index layer) is preferably 5% by mass or more to the total mass (100% by mass) of the refractive index layers, more preferably 20% by mass or more. When the content of the synthetic polymer is 5% by mass or more, a strong film can be formed, and when it is 20% by mass or more, more preferably this effect is more remarkably exhibited. On the other hand, the content of the synthetic polymer is preferably 80% by mass or less for controlling the refractive index. The refractive index layer having the range described above can be produced by controlling the concentration of the synthetic polymer to the total solid matter in the coating liquid.

### (Gelatin)

As the gelatin applicable for the current invention (water-swellable polymer), gelatin treated with an acid may be used, in addition to gelatin treated with lime, and hydrolyzed gelatin and enzyme-degraded gelatin may also be used. These water-swellable polymers may be used alone or as a mixture of multiple kinds.

It is preferable to use gelatin having a lowmolecular weight (for example, a weight mean molecular weight of 5000 to 25000) is used together with gelatin having a high molecular weight (for example, a weight mean molecular weight of 40000 to 200000). In that case, a stable viscosity of the coating liquid can be obtained, and the effect of improving the productivity can be obtained. When the two kinds of gelatins are used, it is preferable that the gelatin having a low molecular weight: the gelatin having a high molecular weight (mass ratio) is from 3:7 to 7:3, in terms of the stability of the viscosity of the coating liquid.

A content of the gelatin in the refractive index layers (the low refractive index layer and the high refractive index layer) is preferably 5% by mass or more to the all mass (100% by mass) of the refractive index layers, more preferably 20% by mass or more. When the content of the gelatin is 5% by mass or more, a strong film can be formed, and when it is 20% by mass or more, more preferably this effect is more remarkably exhibited. On the other hand, the content of the gelatin is preferably 80% by mass or less for controlling the refractive index. The refractive index layer having the range described above can be produced by controlling the concentration of the gelatin to the total solid matter in the coating liquid.

### (Polysaccharide Thickener)

The polysaccharide thickener which can be used in the current invention may include, for example, generally known natural simple polysaccharides, natural complex polysaccharides, synthetic simple polysaccharides, and synthetic complex polysaccharides. The details of these polysaccharides are found in "Biochemistry Dictionary (the second edition), published by Tokyo Kagakudojin", "Shokuhin Kogyo" vol. 31 (1988) page 21, and the like.

The polysaccharide thickener used in the current invention refers to a polymer of saccharide having many hydrogen bond groups in the molecule, which is a polysaccharide having a property in which a difference between a viscosity at a low temperature and a viscosity at a high temperature is large due to a difference in hydrogen bonding strength between the molecules that depends on the temperature. The polysaccharide causes viscosity increase by adding fine particles of a metal oxide thereto possibly due to the hydrogen bond to the metal oxide fine particles at a low temperature, and it has an ability of increasing the viscosity by the addition of 1.0 mPa·s or more at 40°C, preferably 5.0 mPa·s or more, more preferably 10.0 mPa·s or more.

The polysaccharide thickeners applicable for the current invention may include, for example, β1-4 glucan (for example, carboxymethyl cellulose, carboxyethyl cellulose, and the like), galactan (for example, agarose, agaropectin, and the like), galactomannoglycan (for example, locust bean gum, guaran, and the like), xyloglucan (for example, tamarind gum, and the like), glucomannoglycan (for example, konjak mannan, wood-derivedglucomannan, xanthan gum, and the like), galactoglucomannoglycan (for example, coniferous tree-derived glycan), arabinogalactoglycan (for example, soybean-derived glycan, microorganism-derived glycan, and the like), glucorhamnoglycan (for example, gellan gum, and the like), glycosaminoglycan (for example, hyaluronic acid, keratan sulfate, and the like), alginic acid and salts of alginic acid, agar, red algae-derived natural polymer polysaccharides such as κ-carrageenan, λ-carrageenan, t-carrageenan, and furcellaran, and the like. The polysaccharides having no carboxylic acid group or sulfonic acid group as the structural unit are preferable, in order not to reduce the dispersion stability of the metal oxide fine particles, which also exist in the coating liquid. As such polysaccharide, for example, polysaccharides formed of only a pentose such as L-arabitose, D-ribose, 2-deoxyribose, or D-xylose, or a hexose such as D-glucose, D-fructose, D-mannose, or D-galactose are preferable. Specifically, tamarind seed gum, which is known as xyloglucan, whose main chain is glucose and side chain is xylose; guar gum, locust bean gum or tara gum, which are known as galactomannan, whose main chain is mannose and side chain is galactose; arabinogalactan whose main chain is galactose and side chain is arabinose can preferably be used.

In the current invention, two or more kinds of the polysaccharide thickeners may be together used.

A content of the polysaccharide thickener in each refractive index layer (the low refractive index layer and the high refractive index layer) including it is preferably 5% by mass or more and 50% by mass or less, more preferably 10% by mass or more and 40% by mass or less. However, when another water-soluble polymer or an emulsion resin is used together with it, the layer may include the polysaccharide thickener in a content of 2% by mass or more. When the amount of the polysaccharide thickener is small, the tendency in which the film surface is disturbed when the coating film is dried, thus resulting in deteriorated transparency becomes large. On the other hand, when the content is 50% by mass or less, the relative content of themetal oxide is appropriate, and the difference in the refractive index between the high refractive index layer and the low refractive index layer can be easily increased.

### [Curing Agent]

In the current invention, in order to cure the water-soluble polymer, which is a binder, it is preferable to use a curing agent. It is preferable, accordingly, that the refractive index layers (the low refractive index layer and the high refractive index layer) in the current invention include the curing agent.

The curing agent applicable for the current invention is not particularly limited, so long as it cause a curing reaction with the water-soluble polymer, and may include in general compounds having a group capable of reacting with the water-soluble polymer, compounds which promote a reaction of different groups exist in the water-soluble polymer. It is appropriately selected and used depending on the kind of the water-soluble polymer.

For example, when the water-soluble polymer is polyvinyl alcohol, boric acid and its salts are preferable. In addition to the compounds, known curing agents may be used, and specific examples of the curing agent may include epoxy curing agents (diglycidyl ethyl ether, ethyleneglycol diglycidyl ether, 1,4-butanediol diglycidyl ether, 1,6-diglycidyl cyclohexane, N,N-diglycidyl-4-glycidyl oxyaniline, sorbitol polyglycidyl ether, glycerol polyglycidyl ether, and the like); aldehyde curing agents (formaldehyde, glyoxal, and the like) ; active halogen curing agents (2,4-dichloro-4-hydroxy-1,3,5-s-triazine, and the like); active vinyl compounds (1,3,5-tris-acryloyl-hexahydro-s-triazine, bisvinylsulfonylmethyl ether, and the like), aluminum alum, and the like.

When the water-soluble polymer is gelatin, the curing agent may include, for example, organic hardener such as vinyl sulfone compounds, urea-formalin condensation products, melanine-formalin condensation product, epoxy compounds, aziridine compounds, active olefins, and isocyanate compounds; inorganic polyvalent metal salts of chromium, aluminum or zirconium, and the like.

When the water-soluble polymer is the polysaccharide thickener, the curing agent may include epoxy compounds, aldehyde compounds, and the like.

The total amount of the curing agents used is preferably 1 to 600 mg per g of the water-soluble polymer, more preferably 100 to 600 mg per g of the water-soluble polymer.

### [Metal Oxide Particle]

In the current invention, the metal oxide particles are used for forming the low refractive index layer or the high refractive index layer. The metal oxide used for the above propose may include, for example, titanium dioxide, zirconium oxide, zinc oxide, synthetic amorphous silica, colloidal silica, alumina, colloidal alumina, lead titanate, red lead, yellow lead, zinc yellow, chromium oxide, ferric oxide, iron black, copper oxide, magnesium oxide, magnesium hydroxide, strontium titanate, yttrium oxide, niobium oxide, europium oxide, lanthanum oxide, zircon, tin oxide, and the like. Of these, it is preferable to use solid fine particles of compound selected from titanium dioxide, silicon dioxide and alumina as the metal oxide particles. The alumina or alumina hydrate may be crystalline or amorphous, which may be in any shape such as an amorphous particle, spherical particle, or acicular particle. The metal oxide particles may be used alone or as a mixture of two or more kinds in each refractive index layer.

A mean particle size of the metal oxide particles is obtained by observing the particles themselves or particles appearing on the cross-section or the surface of the refractive index layers (the low refractive index layer and the high refractive index layer) using an electron microscope, measuring a particle size of 1000 arbitrary particles, and calculating a simple mean value (number average). Here, a particle size of each particle is expressed by a diameter of a circle having the same area as the projected area of the particle.

The metal oxide particles have a particle size of preferably 100 nm or less, more preferably 4 to 50 nm, even more preferably 4 to 35 nm.

A content of the metal oxide particles in the refractive index layers (the low refractive index layer and the high refractive index layer) is preferably 30% by mass or more to the total mass (100% by mass) of the refractive index layers, more preferably 40% by mass or more. When the content of the metal oxide particles is 30% by mass or more, a function as the low refractive index layer or the high refractive index layer can be exhibited, when it is 40% by mass or more, more preferably the function can be remarkably exhibited. On the other hand, the content of the metal oxide particles is preferably 95% by mass or less, for securing the binding property of the metal oxide particles to each other, and for forming the coating film. The refractive index layer including the metal oxide particles in the range described above can be formed by controlling the concentration of the metal oxide particles to the total solid matter in the coating liquid.

In the low refractive index layer, it is preferable to use silicon dioxide (silica) as the metal oxide, and it is particularly preferable to use an acidic colloidal silica sol.

### [Silicon Dioxide]

As the silicon dioxide (silica) which can be used in the current invention, silica which is synthesized by a usual wet method, colloidal silica, and silica which is synthesized by a gas phase method are preferably used. As the fine particulate silica which is particularly preferably used in the current invention, the colloidal silica and fine particulate silica which is synthesized by a gas phase method are preferable. Of these, the fine particulate silica which is synthesized by a gas phase method is preferable, because it is difficult to form coarse aggregates when it is added to the cationic polymer.

It is preferable that the metal oxide particles are in a state in which a dispersion of the fine particles is dispersed to the primary particle before it is mixed with the cationic polymer.

The kind and the content of the metal oxide particles may be appropriately decided so as to obtain desired refractive indexes of the high refractive index layer and the low refractive index layer.

In the low refractive index layer, it is preferable to use silicon dioxide (silica) as the metal oxide particles, and it is particularly preferable to use an acidic colloidal silica sol.

### [Silicon Dioxide]

As the silicon dioxide (silica) which can be used in the current invention, silica which is synthesized by a usual wet method, colloidal silica, and silica which is synthesized by a gas phase method (fine particulate silica by a gas phase method) are preferably used. As the fine particulate silica which is particularly preferably used in the current invention, the colloidal silica and fine particulate silica which is synthesized by a gas phase method (fine particulate silica by a gas phase method) are preferable.

For example, in the case of the fine particulate silica by a gas phase method, a mean particle size (particle size in the dispersion state before coating) of the metal oxide particles dispersed in the state of a primary particle is preferably 100 nm or less, more preferably from 4 to 50 nm, most preferably from 4 to 20 nm.

As the silica, which is most preferably used, has a mean particle size of the primary particle of 4 to 20 nm, and is synthesized by a gas phase method (the fine particulate silica by a gas phase method), for example, Aerosil, manufactured by Nippon Aerosil Co., Ltd is commercially available. This fine particulate silica by a gas phase method can be easily dispersed by suction using, for example, a jet stream inductor mixer, manufactured by Mitamura Riken Kogyo Inc., whereby a dispersion of primary particles can be comparatively easily obtained.

The colloidal silica, which is preferably used in the current invention, is obtained by heating and aging silica sol, which is obtained by double decomposing sodium silicate with an acid or the like and passing them through an ion exchange resin layer. The application of this colloidal silica to ink jet recording paper is described in, for example, JP 57-14091 A, JP 60-219083 A, JP 60-219084 A, JP 61-20792 A, JF 61-188183 A, JP 63-17807 A, JP 4-93284 A, JP 5-278324 A, JP 6-92011A, JP 6-183134 A, JP 6-297830 A, JP 7-81214A, JP 7-101142 A, JP 7-179029 A, JP 7-137431 A, WO 94/26530, and the like.

A preferable mean particle size of the colloidal silica is generally 5 to 100 nm, and it is particularly preferably 7 to 30 nm.

The silica synthesized by a gas phase method (the fine particulate silica by a gas phase method) and the colloidal silica may be surface-modified with a cation, or may be treated with Al, Ca, Mg, Ba, or the like.

In the current invention, a colloidal silica composite emulsion may be used as the metal oxide in the low refractive index layer. The colloidal silica composite emulsion, which is preferably used in the current invention, has a core of the particle mainly formed of a polymer or copolymer, and is obtained by polymerization of a monomer having an ethylenically unsaturated bond in the presence of colloidal silica described in JP 59-71316 A or JP 60-127371 A in a conventionally known emulsion polymerization method. The colloidal silica in the composite emulsion has preferably a particle size of less than 40 nm.

The colloidal silica for preparing the composite emulsion may generally include primary particles having a particle size of 2 to 100 nm. The ethylenical monomer may include, for example, materials known in the latex field such as (meth)acrylic acid esters having an alkyl group with 1 to 18 carbon atoms, an aryl group or allyl group, styrene,α-methyl styrene, vinyl toluene, acrylonitrile, vinyl chloride, vinylidene chloride, vinyl acetate, vinyl propionate, acrylamide, N-methylolacrylamide, ethylene, and butadiene. If necessary, in order to improve the compatibility with the colloidal silica, vinyl silane such as vinyl trimethoxysilane, vinyl triethoxysilane or γ-methacryloxypropyltrimethoxysilane is used as an additive, and in order to stabilize the dispersibility of the emulsion, an anionic monomer such as (meth) acrylic acid, maleic acid, maleic anhydride, fumaric acid or crotonic acid is used as an additive. The ethylenical monomer may be used as a mixture of two or more kinds if necessary.

A ratio of the ethylenical monomer/the colloidal silica in the emulsion polymerization is preferably 100/1 to 200 by a solid ratio.

Of the colloidal silica composite emulsions used in the current invention, composite emulsions having a glass transition point of -30 to 30°C are more preferable.

The composite emulsion having a composition including an ethylenical monomer such as an acrylic acid ester or methacrylic acid ester is preferable. In particular, copolymers of a (meth)acrylic acid ester and styrene, copolymers of a (meta)acrylic acid alkyl ester and a (meth)acrylic acid aralkyl ester, and copolymers of a (meth) acrylic acid alkyl ester and a (meth) acrylic acid aryl ester are preferable.

An emulsifier used in the emulsion polymerization may include, for example, alkylallylpolyethersulfonic acid sodium salts, laurylsulfonic acid sodium salts, alkylbenzenesulfonic acid sodium salts, polyoxyethylenenonylphenylether nitric acid sodium salts, sodium alkylallylsulfosuccinate, sulfopropylmaleic acid monoalkylester sodium salts.

As for the preferable particle size, primary particles have a particle size of 10 nm or less, and secondary particles have a particle size of 30 nm or less, which cause small haze and excellent visible light permeability.

As the metal oxide included in the high refractive index layer, TiO₂, ZnO and ZrO₂ are preferable, and TiO₂ (titanium dioxide) sol is more preferable, in terms of the stability of a metal oxide particles-containing compound, which is used for forming the high refractive index layer. In particular, rutile type TiO₂ is more preferable than anatase type TiO₂ in the TiO₂, because the weatherability of the high refractive index layer and layers adjacent thereto can be improved due to the low catalyst activity, and the high refractive index. In one embodiment of the current invention, accordingly, the metal oxide particles is the rutile type titanium dioxide.

### [Titanium Dioxide]

### Production Method of Titanium Dioxide Sol

A first step in the production method of fine particulate rutile type titanium dioxide is a step in which titanium dioxide hydrate is treated with at least one basic compound selected from the group consisting of hydroxides of an alkali metal and hydroxides of an alkaline earth metal (Step 1).

The titanium dioxide hydrate can be obtained by hydrolysis of a water-soluble titanium compound such as titanium sulfate or titanium chloride. The hydrolysis procedure is not particularly limited, and known procedures may be used. Compounds obtained by thermal hydrolysis of titanium sulfate are especially preferable.

Step (1) described above can be performed, for example, by adding the basic compound to an aqueous suspension of the titanium dioxide hydrate, and treating (reacting) the mixture under conditions of a pre-determined temperature for a pre-determined time.

The method for making the aqueous suspension of the titanium dioxide hydrate is not particularly limited, which can be performed by adding the titanium dioxide hydrate to water, and stirring the resulting mixture. A concentration of the suspension is not particularly limited, and for example a concentration of TiO₂ in the suspension of 30 to 150 g/L is preferable. The reaction (treatment) can be efficiently advanced in the range described above.

At least one basic compound selected from the group consisting of hydroxides of an alkali metal and hydroxides of an alkaline earth metal, which is used in Step (1), is not particularly limited, and may include sodium hydroxide, potassium hydroxide, magnesium hydroxide, calcium hydroxide. In Step (1), the basic compound is preferably added in a concentration of 30 to 300 g/L in the suspension to be reacted (to be treated).

Step (1) is preferably performed at a reaction (treatment) temperature of 60 to 120°C. The reaction (treatment) time varies depending on the reaction (treatment) temperature, and it is preferably 2 to 10 hours. The reaction (treatment) is preferably performed by adding the aqueous solution of sodium hydroxide, potassium hydroxide, magnesium hydroxide or calcium hydroxide to the suspension of titanium dioxide hydrate. After the reaction (treatment) is finished, the reaction (treatment) mixture is cooled, and neutralized with an inorganic acid such as hydrochloric acid if necessary, and then it is filtered and washed with water, whereby the fine particulate titanium dioxide hydrate can be obtained.

In a second step (Step (2)), the compound obtained in Step (1) may be treated with a carboxylic acid group-containing compound and an inorganic acid. In the production of the fine particulate rutile type titanium dioxide, a method for treating the compound obtained in Step (1) with the inorganic acid is known, and it is possible to control the particle size by using the carboxylic acid group-containing compound in addition to the inorganic acid or instead of the inorganic acid.

The carboxylic acid group-containing compound is an organic compound having a group: -COOH. As the carboxylic acid group-containing compound, polycarboxylic acid having 2 or more, more preferably 2 or more and 4 or less, carboxylic acid groups is preferable. It can be supposed that the polycarboxylic acid has a coordinating property to a metal atom, and thus the aggregation of fine particles is inhibited by the coordination, whereby the fine particulate rutile type titanium dioxide can be preferably obtained.

The carboxylic acid group-containing compound is not particularly limited, and it may include, for example, dicarboxylic acids such as oxalic acid, malonic acid, succinic acid, glutaric acid, adipic acid, propylmalonic acid, and maleic acid; polyvalent hydroxycarbonic acids such as malic acid, tartaric acid, and citric acid; aromatic polycarboxylic acids such as phthalic acid, isophthalic acid, and hemimellitic acid, and trimellitic acid; ethylenediaminetetraacetic acid. Two or more compounds selected from these compounds may be together used at the same time.

All or apart of the carboxylic acid group-containing compounds may be a product resulted from neutralization of an organic compound having a group: -COOH (for example, an organic compound having a group: -COONa).

The inorganic acid described above is not particularly limited, and may include, for example, hydrochloric acid, sulfuric acid, nitric acid, and the like. The inorganic acidmay be added in a concentration of preferably 0.5 to 2.5 mole/L, more preferably 0.8 to 1.4 mole/L, in the liquid for the reaction (the treatment).

In Step (2), it is preferable to suspend the compound obtained in Step (1) in pure water, to stir the mixture if necessary while the mixture is heated. The carboxylic acid group-containing compound and the inorganic acid may be added at the same time or sequentially, and the sequential addition is preferable.

The addition may be performed either in a way in which after the carboxylic acid group-containing compound is added, the inorganic acid is added, or a way in which after the inorganic acid is added the carboxylic acid group-containing compound is added.

There are methods, for example, in which the carboxyl group-containing compound is added to a suspension of the compound obtained in Step (1), heating is started, the inorganic acid is added thereto when the liquid temperature reaches 60°C or higher, preferably 90°C or higher, and the mixture is stirred for preferably 15 minutes to 5 hours, more preferably 2 to 3 hour while maintaining the liquid temperature (Method 1) ; and in which the suspension of the compound obtained in Step (1) is heated, the inorganic acid is added thereto when the liquid temperature reaches 60°C or higher, preferably 90°C or higher, the carboxylic acid group-containing compound is added thereto after 10 to 15 minutes from the addition of the inorganic acid, and the mixture is stirred for preferably 15 minutes to 5 hours, more preferably 2 to 3 hours while maintaining the liquid temperature (Method 2). Preferable fine particulate rutile type titanium dioxide can be obtained by performing these methods.

When Step (2) is performed in Method 1, it is preferable to use the carboxylic acid group-containing compound in an amount of 0.25 to 1.5% by mole to 100% by mole of TiO₂, more preferably 0.4 to 0.8% by mole. When the amount of the carboxylic acid group-containing compound added is less than 0.25% by mole, the particle growth is progressed too much; as a result particles having a desired particle size may not possibly be obtained. When the amount of the carboxylic acid group-containing compound added is more than 1.5% by mole, the rutile type particles may not be obtained, and anatase particles may possibly be obtained.

When Step (2) is performed in Method 2, it is preferable to use the carboxylic acid group-containing compound in an amount of 1.6 to 4.0% by mole to 100% by mole of TiO₂, more preferably 2.0 to 2.4% by mole.

When the amount of the carboxylic acid group-containing compound added is less than 1.6% by mole, the particle growth is progressed too much; as a result particles having a desired particle size may not possibly be obtained. When the amount of the carboxylic acid group-containing compound added is more than 4.0% by mole, the rutile type particles may not be obtained, and anatase particles may possibly be obtained. Even if the amount of the carboxylic acid group-containing compound added is more than 4.0% by mole, excellent effects are not obtained, which is economically disadvantageous. When the carboxylic acid group-containing compound is added within less than 10 minutes after the addition of the inorganic acid, the rutile type particles may not be obtained, and anatase particles may possibly be obtained. When it is added after more than 15 minutes after the addition of the inorganic acid, the particle growth is progressed too much; as a result particles having a desired particle size may not possibly be obtained.

In Step (2), it is preferable that after the reaction (the treatment) is finished, the reaction mixture is cooled and neutralized so as to be a pH of 5.0 to pH 10.0. The neutralization can be performed with an alkaline compound such as an aqueous sodium hydroxide or aqueous ammonia. After the neutralization, the resulting liquid is filtered and washed with water to separate the desired fine particulate rutile type titanium dioxide.

As the method for producing titanium dioxide fine particles, known methods described in "Titanium Oxide-Physical Properties and Applied Technology" (Manabu SEINO, pp 255-258 (2000) Gihodo Shuppan Co., Ltd.) may be used.

The titanium dioxide fine particles have a primary particle size of preferably 4 to 50 nm, more preferably 4 to 35 nm.

### [Amino Acid]

In the current invention, in order to improve the dispersibility of the metal oxide, an amino acid may be added to each refractive index layer (the low refractive index layer or the high refractive index layer).

The amino acid in the current invention is a compound having an amino group and a carboxyl group in the same molecule, and may be any type of α-, β- and γ-type. Amino acids having an isoelectric point of 6.5 or less are preferable. The amino acid includes optical isomers, but in the current invention, there is no difference in the effects due to the optical isomer, and any isomer having an isoelectric point of 6.5 or less may be used alone or as a racemate.

Detailed explanations of the amino acid applicable for the current invention can be found in descriptions in "Kagaku Dai Jiten" a reduced-size edition (Kyoritsu Shuppan Co., Ltd., published in 1960) pp 268-270.

In the current invention, preferable amino acids may include glycine, alanine, valine, α-aminobutyric acid, γ-aminobutyric acid, β-alanine, serine, ε-amino-n-captoic acid, leucine, norleucine, phenylalanine, threonine, asparagine, asparatic acid, histidine, lysine, glutamine, cysteine, methionine, proline, hydroxyproline. In order to use it as an aqueous solution, it is preferable that a solubility is 3 g or more to 100 g of water at an isoelectric point, and for example, glycine, alanine, serine, histidine, lysine, glutamine, cystein, methionine, proline, and hydroxyproline are preferably used. It is more preferable to use serine or hydroxyproline having a hydroxyl group, because the metal oxide particles have a gentle hydrogen bond with the binder.

### [Other Additive for Refractive Index Layer]

The high refractive index layer and the low refractive index layer in the current invention may include various additives if necessary.

known various additives may be included, for example, an ultraviolet absorber described in JP 57-74193 A, JP 57-87988 A, and JP 62-261476 A; a discoloration inhibitor described in JP 57-74192 A, JP 57-87989 A, JP 60-72785 A, JP 61-146591 A, JP1-95091A, andJP3-13376A; various surfactants including anionic, cationic and nonionic surfactants; a fluorescent brightening agent described in JP 59-42993 A, JP 59-52689 A, JP 62-280069 A, JP 61-242871 A, and JP 4-219266 A; a pH controlling agent such as sulfuric acid, phosphoric acid, acetic acid, citric acid, sodium hydroxide, potassium hydroxide, and potassium carbonate; an antifoaming agent; a lubricant such as diethylene glycol, a preservative, an antistatic agent, a matting agent.

### [Film Support (Resin Film)]

The optical reflective film of the current invention has at least one alternately laminated unit described above on thefilmsupport. The film support is not particularly limited, so long as it can support the alternately laminated unit.

As the film support used in the current invention, it is preferable to use various resin films. Polyofefin films (polyethylene, polypropylene, and the like), polyester films (polyethylene terephthalate, polyethylenenaphthalate, and the like), polyvinyl chloride, cellulose triacetate, and the like can be used, and polyester films are preferable. The polyester film (hereinafter referred to as "polyester") is not particularly limited, and polyesters having a dicarboxylic acid component and a diol component as the main structural components, and a film-forming property are preferable. The dicarboxylic acid component, which is the main structural component, may include terephthalic acid, isophthalic acid, phthalic acid, 2,6-naphthalenedicarboxylic acid, 2,7-naphthalenedicarboxylic acid, diphenylsulfone dicarboxylic acid, diphenyl ether dicarboxylic acid, diphenylethane dicarboxylic acid, cyclohexane dicarboxylic acid, diphenyl dicarboxylic acid, diphenyl thioether dicarboxylic acid, diphenyl ketone dicarboxylic acid, phenylindane dicarboxylic acid. The diol component may include ethylene glycol, propylene glycol, tetramethylene glycol, cyclohexane dimethanol, 2,2-bis(4-hydroxyphenyl)propane, 2,2-bis(4-hydroxyethoxyphenyl)propane, bis(4-hydroxyphenyl)sulfone, bisphenolfluorenedihydroxyethyl ether, diethylene glycol, neopentyl glycol, hydroquinone, cyclohexanediol. Of the polyesters having these main structural components, polyesters including terephthalic acid or 2,6-naphthalenedicarboxylic acid as the dicarboxylic acid component, and ethylene glycol or 1,4-cyclohexanedimethanol as the diol component as the main structural component, are preferable in terms of the transparency, the mechanical strength and dimensional stability. Of these, polyesters including polyethylene terephthalate or polyethylene naphthalate as the main structural component, copolymerized polyesters including terephthalic acid, 2,6-naphthalenedicarboxylic acid and ethylene glycol, and polyesters including the mixture of the two or more polyesters described above as the main structural component are preferable.

The film support used in the current invention has a thickness of preferably 10 to 300 µm, particularly preferably 20 to 150 µm. The film support in the current invention may be two sheets doubled, and in that case, the kinds thereof may be the same or different.

### [Production Method according to Simultaneous Multilayer Coating]

The optical reflective film of the current invention can be produced by providing multiple structural layers including the high refractive index layer and the low refractive index layer on the support according to an aqueous simultaneous multilayer coating, which is appropriately selected from known coating methods, and then setting and drying the layers. Mixing occurs to some extent at each layer boundary by the simultaneous lamination until each coating liquid is set, whereby the mixed regions described above can be formed. In the mixed region, the refractive index can be continuously changed from the high refraction region to the low refraction region.

As the coating method, for example, a roll coating method, a rod bar coating method, air-knife coating method, a spray coating method, a curtain coating method, a slid bead coating method using a hopper described in US 2,761,419 or US 2,761,791, or an extrusion coating method is preferably used.

In the current invention, in order to form a laminate having a continuous distribution of the refractive index by the multilayer coating, it is preferably that a mass ratio (F/B) of the metal oxide particles (F) to the water-soluble polymer (B) in each layer coating liquid is in a range of preferably 0.3 to 10, more preferably 0.5 to 5.

In each refractive index layer coating liquid, a concentration of the water-soluble polymer in the coating liquid is preferably from 0.3 to 3% by mass, more preferably from 0.35 to 2% by mass.

A pH of each refractive index layer coating liquid (pH on the coating film surface) is preferably 4 to 9, more preferably 5 to 8. In such a case, a coating liquid having a high temporal stability can be obtained. The pH can be controlled by addition of a pH controlling agent, or an acid and/or a base to the coating liquid.

The setting time is controlled by control of a viscosity, which is performed by a concentration of the metal oxide fine particles or another component. The setting time can also be controlled by control of a mass ratio of the binder, or addition or control of various known gelling agent such as gelatin, pectin, agar, carrageenan, and gellan gum.

Here, the term "set" refers to, for example, a step in which a viscosity of the coating film composition is increased by a way wherein a temperature of a coating film is decreased by blowing cold wind to the coating film, whereby substance fluidity between the layers and each layer is reduced. Specifically, a time from the coating to the setting (a setting time) refers to a period of time at which nothing adheres to a finger when the finger is pressed to the surface, while cold wind is blown to the surface of the coating film.

A temperature condition when cold wind is used (a temperature of cold wind at setting) is preferably 25°C or lower, more preferably 15°C or lower. A time during which the coating film is exposed to the cold wind depends on the carrying speed of the coating film, but it is preferably 10 seconds or more and 120 seconds or less.

Preferably, a time from the simultaneous multilayer coating of the high refractive index layer and the low refractive index layer to sol-gel transition and completion of the setting is set at 5 minutes or less, preferably 2 minutes or less. The time is preferably set at 45 seconds or more. This is because, as described above, the optical filmthickness is set so as to correspond to the case of A1/3, B1/6 and C1/3, i. e. , the laminate film is formed so as to have the refractive index profile in which the position at which the refractive index to the maximum refractive index is the maximum refractive index-Δn/3, wherein the maximum refractive index-the minimum refractive index = Δn, is within a range of 0.9/3 to 1.1/3 of the width from the maximum refractive index to the minimum refractive index (the layer thickness) from the maximum refractive index point, and, as for the minimum refractive index, the position at which the refractive index to the minimum refractive index is the minimum refractive index + Δn/3 is within a range of 0.9/3 to 1.1/3 of the width from the maximum refractive index to the minimum refractive index (the layer thickness) from the minimum refractive index point. When the time up to the completion of the setting is too short, preferable mixing of components may not occur. When the time up to the completion of the setting is too long, the mixing of the layers progresses too much, and the difference in the refractive index required may not be obtained.

When the simultaneous multilayer coating is performed, a viscosity is within a range of preferably 5 to 100 mPa.s, more preferably 10 to 50 mPa.s in the coating of each coating liquid, in a case of using a slide bead coating method. When a curtain coating method is used, the viscosity is within a range of preferably 5 to 1200 mPa·s, more preferably 25 to 500 mPa·s.

A viscosity of the coating liquid at 15°C is preferably 100 mPa·s ormore, more preferably from 100 to 30, 000 mPa·s, even more preferably from 3,000 to 30,000 mPa·s, most preferably from 10,000 to 30,000 mPa·s.

As an applying and drying method, a method in which the coating liquid is heated to 30°C or higher, the liquid is applied, the formed coating film is once cooled to a temperature of 1 to 15°C, and the film is dried at 10°C or higher is preferable, and a method in which the drying is performed in drying conditions of a wet bulb temperature of 5 to 50°C and a film surface temperature of 10 to 50°C is more preferable. The cooling method immediately after the coating is preferably a horizontal setting method in terms of the uniformity of the formed coating film.

### [Optical Reflective Film]

When the optical reflective film of the current invention is applied to a heat barrier film, it is preferable that a multilayered film in which films having a refractive index different from each other are laminated on the polymer film by the simultaneous multilayer coating is formed, and the optical film thickness and the unit are designed so that a permeability of the visible light region, shown in JIS R3106-1998, is 50% or more, and the optical film has a region in regions from 900 nm to 1400 nm of wavelength wherein reflectivity thereof is more than 40%.

With respect to the heat barrier film, an infrared region in incident spectra of lights directly transmitting from the sun affects on increase of a room temperature, and the increase of the room temperature can be suppressed by insulating the infrared region. In a case where a cumulative energy ratio from the shortest wavelength of the infrared (760 nm) to the longest wavelength 3200 nm is observed based on a weighting coefficient, discribed in the Japanese Industrial Standards JIS R 3106-1998, when a cumulative energy from 760 nm to each wavelength to the total energy of the whole infrared region from 760 nm of the wavelength to 3200 nm of the longest wavelength, which is defined as 100, is observed, the total energy from 760 nm to 1300 nm occupies about 75% that of the whole infrared region. The insulation of the wavelength region up to 1300 nm provides the most efficient energy consumption reduction effect by the insulation of heat ray.

when the reflectivity of this near infrared region (from 760 to 1300 nm) is about 80% or more at the maximum peak, reduction of a feeling temperature can be obtained by a sensory evaluation. For example, a clear difference is observed in a feeling temperature at a window facing southeast in the mornings of August when the reflectivity of the near infrared region is insulated by about 80% at the maximum peak value.

As a result of the search of a multilayered film structure necessary for expressing such a function by an optical simulation (FTG Software Associates Film DESIGN Version 2.23.3700), it is found that excellent properties can be obtained when a high refractive index layer having a refractive index of 1.9 or more, desirably 2.0 or more, is utilized, and 6 or more layers of the total of the high refraction layers and the low refraction layers are laminated. For example, in a simulation of a model in which 8 layers of the high refractive index layers and the low refractive index layers (the refractive index = 1.35) are alternately laminated, the results show that the reflectivity does not reach about 70% in a high refractive index layer having a refractive index of 1.8, but a reflectivity of about 80% can be obtained when the refractive index is 1.9. In a model in which the high refractive index layers (a refractive index = 2.2) and the low refractive index layers (a refractive index = 1.35) are alternately laminated, the reflectivity does not reach 60% in a case where the number of the layers laminated is 4, but a reflectivity of about 80% can be obtained in a case of 6 layers.

As described above, the wavelength of the light to be reflected can be controlled by changing the optical film thickness, and thus in the unit in which the high refractive index layer and the low refractive index layer are alternately laminated, a structure in which multiple units having a different optical film thickness, wherein the high refractive index layer and the low refractive index layer, are laminated is formed, whereby a range of light to be reflected is widened, thus resulting in acquisition of a heat barrier film capable of reflecting not only near infrared but also a part of infrared or visible light region.

In one embodiment of the current invention, accordingly, the optical reflective film has two or more units having a different optical film thickness in which the high refractive index layer and the low refractive index layer are alternately laminated, wherein the two or more units include one or more units which mainly reflect the visible light and one or more units which mainly reflect the near infrared light. Such a structure has no heat-absorption part, and thus reduction of heat ray insulating effect caused by radiation can be prevented, and the energy consumption reduction effect can be effectively obtained by heat ray insulation.

The phrase "mainly reflects the visible light" means that the maximum reflect wavelength is provided at a wavelength in a wavelength bandwidth of 400 to 700 nm. The phrase "mainly reflects the near infrared light" means that the maximum reflect wavelength is provided at a wavelength in a wavelength bandwidth of 780 to 1300 nm.

### [Application of Optical Reflective Film]

The optical reflective film of the current invention can be applied to a wide range of field. For example, the film is bonded to a facility (substrate) which is exposedto sunlight for a long time, such as outside windows of buildings or windows of cars, and the film is used as films for a window such as a heat ray reflecting film, providing heat ray reflecting effect, or films for a plastic greenhouse for farm, mainly for the purpose of improving the weater ability. In particular, the film can be preferably used in a member to which an optical external-reflection film of the current invention is bonded directly or through an adhesive (an adhesive layer) to a substrate such as glass or a glass alternative resin.

The adhesive (the adhesive layer) is set so that the near infrared reflection film is disposed on an incidence plane side of sunlight (heat ray) when it is bonded to the window glass, or the like. When the near infrared reflection film is put between the window glass and the base material, sealing from ambient gas such as moisture can be realized, which is preferable in terms of the durability. When the near infrared reflection film of the current invention is set outdoors or outside of cars (for outdoor bonding), environmental durability can be preferably exhibited.

As the adhesive (the adhesive layer) applicable for the current invention, adhesives including, as a main component, a photo-curable or thermosetting resin can be used.

Adhesives having durability to ultraviolet rays are preferable, and acrylic pressure sensitive adhesives and silicone pressure sensitive adhesives are preferable. The acrylic pressure sensitive adhesives are more preferable in terms of the adhesive properties and the cost. Solvent acrylic pressure sensitive adhesives are particularly preferable among the solvent and emulsion types, because the peeling-off strength can be easily controlled. When the polymer obtained by a solution polymerization as the solvent acrylic pressure sensitive adhesive, known monomers may be used.

A polyvinyl butyral resin or ethylene-vinyl acetate-copolymer resin, which is used as an intermediate layer in a laminated glasses, may be used as the adhesive (the adhesive layer). Specific examples therecf may include plastic polyvinyl butyral [manufactured by Sekisui Chemical Co., Ltd. , Mitsubishi Monsanto Chemical Co., and the like]; ethylene-vinyl acetate-copolymers [DuPont, Inc., and Takeda Pharmaceutical Company Limited, Duramin]; modified ethylene-vinyl acetate-copolymers [Tosoh Corporation, Melsen G], and the like. The adhesive layer may appropriately include an ultraviolet absorber, an anti-oxidant, an anti-static agent, a heat stabilizer, a lubricant, filler, a coloring agent, adhesion controlling agent, and the like.

A metal oxide may be used as a light-absorbing substance which absorbs light other than the reflection band. As such a metal oxide, tin oxide, indium oxide, zinc oxide, cadmium oxide, antimony-dopedtin oxide (ATO), fluorine-doped tin oxide (FTO), tin-doped indium oxide (ITO) and aluminum-doped zinc oxide (AZO) are preferably used, and ATO and ITO are particularly preferable.

### Example

The current invention is specifically explained by Examples, but the invention is not limited thereto.

### Example 1

### (Sample 1: Comparative Example)

A polyethylene terephthalate (F20S having an intrinsic viscosity of 0.65 and a melting point of 255°C, manufactured by Toray Industries, Inc.) was used as a resin A. A resin in which polyethylene terephthalate copolymer (an intrinsic viscosity: 0. 72, copolymer having 29% by mole of a cyclohexane dicarboxylic acid component and 20% by mole of a spiroglycol component), PBT (Traycon manufactured by Toray Industries, Inc.), PET (manufactured by Toray Industries, Inc.) and ADK STAB (AS 36 manufactured by ADEKA Corporation) were mixed in a mass ratio of 69.9/20/10/0.1, and the mixture was melt-kneaded and solidified was used as a resin B. Each of the resin A and the resin B was molten in an extruder at 270°C, and they were extruded through slits while the amounts thereof were measured by a gear pomp so that the resin A/the resin B is 1.2/1, to produce a laminate having the layers laminated of 400 in total. After that, the film was drawn at a temperature of 110°C in a transverse direction at a drawing ratio of 3.3, 5% relaxation treatment was performed at the same temperature in the same direction, and cooled to room temperature to produce an optical reflective film having a total film thickness of 40 µm of Comparative Example 1.

### (Sample 2: Comparative Example)

A composition described below was dispersed in a ball mill for 4 hours to produce a dispersion of titanium oxide having a dispersion particle size of 20 nm at D50.
Isopropanol 100 parts by mass
Pyridine 3 parts by mass
Ethyl silicate (including 30% by mass of effective components, manufactured by Colcoat Co., Ltd.) 5 parts by mass
Rutile type titanium oxide particles (volume mean particle size: 15 nm) 10 parts by mass

With the obtained dispersion were admixed 1.5 parts by mass of a ultraviolet curable binder (X-12-2400 manufactured by Shin-Etsu Chemical Co., Ltd., having 30% by mass of effective components), and 0.15 parts by mass of a catalyst (DX-2400 manufactured by Shin-Etsu Chemical Co., Ltd.), and the mixture was dispersed in a ball mill for one hour to obtain a titanium oxide-containing coating liquid 1 for a high refractive index layer, having a dispersion particle size of 16 nm at D50. The coating liquid was applied to a polyethylene terephthalate film having a thickness of 50 µm in condition in which a dry film thickness was 75 nm using a spin coater, the resulting film was dried at 100°C. After that, ultraviolet rays were exposed thereto to cure the form, whereby a titanium oxide-containing high refractive index layer 1 was formed on the base material.

A coating liquid 1 for the low refractive index layer was prepared in the same manner as in the preparation of the coating liquid 1 for the high refractive index layer, except that silica organosol (XBA-ST having a mean primary particle size of 10 to 20 nm, manufactured by Nissan Chemical Industries, Ltd.) was used instead of the rutile type titanium oxide particles to form a silica-containing coating liquid 1 for the low refractive index layer.

The obtained silica-containing coating liquid 1 for the low refractive index layer was applied to the titanium oxide-containing high refractive index layer 1 in conditions in which a dry film thickness was 78 nm according to a wet-coating method using a spin coater. Then, the film was dried and heat-cured in the same manner as in the formation of the titanium oxide-containing high refractive index layer 2 to form a silica-containing low refractive index layer 1. The same procedures were repeated, whereby an optical reflective film of Comparative Example 2, which had 12 units having a structure of the titanium oxide-containing high refractive index layer 1/the silica-containing low refractive index layer 1, having total 24 layers, was produced.

### (Sample 3: Current invention)

The following additives 1) to 5) were added in this order, and the mixture was stirred to prepare coating liquid 2 for the high refractive index layer. First, titanium oxide particle sol 1) was heated up to 50°C while it was stirred, and then low molecular weight gelatin 2) was added thereto, and the mixture was stirred for 30 minutes, whereby the surfaces of the titanium oxide particles were coated with the low molecular weight gelatin. Next, high molecular weight gelatin 3) and pure water 4) were added thereto, and the mixture was stirred for 90 minutes. After that, a surfactant 5) was added thereto to prepare coating liquid 2 for the high refractive index layer. This preparation method is referred to as a "preparation pattern A".
1) 20% by mass of titanium oxide particle sol (SRD-02W manufactured by Sakai Chemical Industry Co. , Ltd, rutile type titanium dioxide particles having a volume mean particle size of 35 nm) 60 g
2) Aqueous solution including 5.0% by mass of gelatin having a low molecular weight (Gel L1) 125 g
3) Aqueous solution including 5.0% by mass of gelatin having a high molecular weight (Gel H1) 100 g
4) Pure water 150 g
5) Aqueous solution including 5.0% by mass of a surfactant (Quartamin 24P manufactured by Kao Corporation, a cationic quarternary ammonium salt surfactant) 0.45 g

Gel L1 is a low molecular weight gelatin having a weight mean molecular weight of 20000, which has been hydrolyzed with an alkali treatment (HBC-P20 manufactured by Nitta Gelatin Inc.), and Gel H1 is an acid-treated gelation having a weight mean molecular weight of 130000 (a high molecular weight gelatin) (AP-270 manufactured by Nippi, Inc.).

The following additives 1) to 5) were added in this order, and the mixture was stirred to prepare coating liquid 2 for the low refractive index layer. A coating liquid 2 for the low refractive index layer was prepared in the preparation pattern A in which first, colloidal silica 1) (Snowtex AK manufactured by Nissan Chemical Industries, Ltd., having a mean particle size of 6 nm) was heated up to 40°C while it was stirred, then low molecular weight gelatin 2) was added thereto, the mixture was stirred for 10 minutes, then high molecular weight gelatin 3) and pure water 4) were added thereto, and the mixture was stirred for 10 minutes, followed by addition of a surfactant 5).
1) 20% by mass of colloidal silica 68 g
2) Aqueous solution including 5.0% by mass of low molecular weight gelatin (Gel L1) 180 g
3) Aqueous solution including 5.0% by mass of high molecular weight gelatin (GelH1) 100 g
4) Pure water 240 g
5) Aqueous solution including 5.03 % by mass of a surfactant (Quartamin 24P manufactured by Kao Corporation, a cationic quarternary ammonium salt surfactant) 0.64 g

Gel L1 is a low molecular weight gelatin having a weight mean molecular weight of 20000, which has been hydrolyzed with an alkali treatment, and Gel H1 is an acid-treated gelation having a weight mean molecular weight of 130000 (a high molecular weight gelatin).

The coating liquid 2 for the high refractive index layer and the coating liquid 2 for the low refractive index layer, which were prepared as above, were allowed to stand for 56 hours, while their temperatures were maintained at 45°C. After that, the coating liquid 2 for the high refractive index layer and the coating liquid 2 for the low refractive index layer were applied to a polyethylene terephthalate film having a thickness of 50 µm so that they were alternately deposited in each dry film thickness of 78 nm using a slid hopper, and then cold wind was blown for one minute in a condition in which the film surface temperature was 15°C or lower to the layers. After that, hot wind having a temperature of 80°C was blown thereto to dry them, whereby an optical reflective film formed of 12 high refractive index layers and 12 low refractive index layers (total of 24 layers) was produced. The pH of the film surface was controlled to 7.2. The pH was controlled by using acetic acid and aqueous ammonia. The viscosities of the coating liquid 2 for the high refractive index layer and the coating liquid 2 for the low refractive index layer were respectively 12 mPa.s and 18 mPa.s when they were applied, and the viscosities thereof at 15°C were respectively 2500 mPa.s and 20000mPa·s.

### (Sample 4: Current invention)

An optical reflective film of Sample 4 was produced in the same manner as in the production of Sample 3, except that the gelatin was removed from both of the coating liquid 2 for the high refractive index layer and the coating liquid 2 for the low refractive index layer and, instead, it was changed to polyvinyl alcohol (hereinafter which may be referred to as "PVA") (polyvinyl alcohol 235 manufactured by Kuraray Co., Ltd; a weight mean molecular weight: 140000) having the same mass of the gelatin (the low molecular weight gelatin + the high molecular weight gelatin), and a pH of the film surface was controlled to 5.0 using boric acid/borax. The coating liquid for the high refractive index layer and the coating liquid for the low refractive index layer had, respectively, a viscosity of 13 mPa.s and a viscosity of 20 mPa.s on the coating, and a viscosity of 3500 mPa.s and a viscosity of 19000 mPa.s at 15°C.

### (Sample 5: Current invention)

An optical reflective film of Sample 5 was produced in the same manner as in the production of Sample 4, except that tamarind seed gum (TG-500 manufactured by MRC Polysaccharide Co., Ltd.) was added to the coating liquid 2 for the high refractive index layer in an amount of 15% to the volume of the metal oxide particles (4% to the mass). A pH of the film surface was controlled to 5.5 using boric acid/borax. The coating liquid for the high refractive index layer had a viscosity of 21 mPa.s on the coating, and a viscosity of 5500 mPa.s at 15°C.

### (Samples 6 to 14: Current invention)

Sample 6 to Sample 14 were produced in the same manner as in the production of Sample 4, except that the film thickness and the layer structure in Sample 4 were changed to those shown in Table 1.

High refractive index layers H2 and H3 and low refractive index layers L2 and L3 were produced changing (optical) film thicknesses (nm) of a high refractive index layer H1 and a low refractive index layer L1 formed in each sample. Table 1 shows also the layer structure of Sample.

With respect to the layer structure, for example, (H1/L1) 200means that H1/L1 was repeatedly laminated 200 times, as (Hl/L1) (H1/L1) . . . (H1/L1) /base material.

Samples 9 to 14 were formed including layers with a dry film thickness of 600 nm or more and 1200 nm or less.

### [Evaluation Method]

### (Measurement of Refractive Index of Each Layer)

A sample in which A monolayer of a target layer whose refractive index was to be measured (a high refractive index layer or a low refractive index layer) was applied was formed on a base material (quartz glass), and a refractive index of the high refractive index layer or the low refractive index layer was measured according to the following method. A back surface of the sample to be measured was subjected to roughing treatment, light absorption treatment was performed using a black spray to prevent light reflection on the back surface, and reflection spectra were measured in a visible light region (400 nm to 700 nm) in conditions of 5° regular reflection using U-4000 Model (manufactured by Hitachi, Ltd.) as a spectrophotometer, whereby a refractive index was obtained according to curve fitting of the reflection spectra.

### (Evaluation of Mixed Region between Layers)

With respect to the mixed region between the layers, a laminated film was cut, and amounts of metal elements (Ti and Si) of the high refractive index material (TiO₂) and the low refractive index material (SiO₂) existing in the obtained cross-sectional surface using an XPS surface analyzer, whereby a depth profile was obtained.

### (Mean Visible Light Reflectivity, and Evaluation of Unevenness in Reflectivity)

To a spectrophotometer (U-4000 Model manufactured by Hitachi, Ltd.) a 5° regular reflection unit was attached, and a baseline correction was performed using an attached mirror. After that, a reflectivity was measured at 151 points on the side of the optical reflective layer in a range of 400 to 700 nm at 2 nm intervals, all values of the reflectivity were summed up, and the total value was divided by 151 to obtain a mean visible light reflectivity. Each 20 cm x 20 cm sample applied was prepared, and the sample was divided into 100 grids at 2 cm intervals, and a mean visible light reflectivity in each grid was obtained. A value obtained by subtracting the minimum value from the maximum value was used as a criterion for evaluation of the unevenness in the reflectivity.

Evaluations were performed base on the following criteria:
1: Less than 1% of the maximum value - the minimum value
2: 1% or more and less than 4% of the maximum value - the minimum value
3: 4% or more and less than 8% of the maximum value - the minimum value
4: 8% or more and less than 12% of the maximum value - the minimum value
5: 12% or more of the maximum value - the minimum value

Fig. 1 shows reflection spectra of Sample 9 as a typical example. It can be seen that the sample has the reflection characteristic in the visible light region. The other samples had also the reflection band in the visible light region, as the same as above.

The H1/L1 unit, the H2/L2 unit and the H3/L3 unit function as a unit mainly reflecting the visible light.

The other results are shown in Tables 1 and 2.

In Table 1, the maximum refractive index - Δn/3 shows where a position of a refractive index of the maximum refractive index - Δn/3 to the maximum refractive index from the maximum refractive index point is expressed by a ratio to a width (a layer thickness) from the maximum refractive index to the minimum refractive index.

The minimum refractive index + Δn/3 shows, as the same as above, where a position of a refractive index of the minimum refractive index + Δn/3 to the minimum refractive index from the minimum refractive index point is expressed by a ratio to a width (a layer thickness) from the maximum refractive index to the minimum refractive index.

ΔS is the minimum value of a difference in the refractive index in a given T/4 section which is obtained by dividing a width T (a layer thickness) from the maximum refractive index to the refractive index into four sections (T/4), in the refractive index profile in the film thickness direction showing the continuity in the change of refractive index.

It can be seen that the structure satisfying the current invention has the region in which Ti and Si elements are continuously mixed between the layers by an XPS analysis, has a colored appearance, has the reflection characteristic in the visible light region, and has the excellent unevenness in the reflectivity. According to the XPS analysis of Sample 1 or 2, or Sample 15 described blow, Ti and Si have each a stepwise distribution and a mixed region was not defected. It was seen that when the titanium dioxide in Samples 2 to 14 was changed to zirconium oxide, the mean visible light reflectivity was reduced by 62% from Tables 1 and 2, but the mixed region was detected and there was the same tendency in the unevenness in the reflectivity.

In addition, Sample 15 was produced as described below, and evaluations were performed as above.

### (Sample 15: Comparative Example)

The coating liquid 1 for the high refractive index layer and the coating liquid for the low refractive index in Sample 2 were mixed in a volume ratio of 1:1 to prepare coating liquid 1 for a middle refractive index. Sample 15 having 23 middle refractive index layers and total 47 layers was produced in the same manner as in the production of Sample 2, except that the middle refractive index layers were provided between the high refractive index layers and the low refractive index layers in a dry film thickness of 39 nm. The middle refractive index layer (the formed middle refractive index layer is referred to as "M1") had a refractive index of 1.67; the Ti and Si distribution was stepwise by the XPS analysis; the mean visible light reflectivity was 28%; and the evaluation of the reflect unevenness was 5. It is understood that the current invention having the continuous refractive index distribution has more excellent optical characteristic than films having the refractive index distribution which changes stepwise.

**[Table 1]**

| No. | High refractive index layer (H) | | | Low refractive index layer (L) | | | Film structure | Mixed region | Maximum refractive index -Δn/3 | Minimum refractive index + Δn/3 | ΔS | Remarks |
|---|---|---|---|---|---|---|---|---|---|---|---|---|
| | material | Monolayer Refractive index | Film thickness (nm) | material | Monolayer Refractive index | Film thickness (nm) | | | | | | |
| 1 | Resin | 1.56 | H1=97 | Resin | 1.52 | L1=98 | (H1/L1)²⁰⁰ | Absence | 0.48 | 0.51 | Δn/45 | Comparative Example |
| 2 | TiO₂ + U resin | 1.88 | H1=78 | TiO₂ + UV resin | 1.49 | L1=78 | (H1/L1)¹² | Absence | 0.50 | 0.57 | Δn/35 | Comparative Example |
| 3 | TiO₂ + gelatin | 1.89 | H1=78 | TiO₂ + gelatin | 1.47 | L1=78 | (H1/L1)¹² | Presence | 0.42 | 0.43 | Δn/14 | Current invention |
| 4 | TiO₂ + PVA | 1.89 | H1=78 | SiO₂ + PVA | 1.47 | L1=78 | (H1/L1)¹² | Presence | 0.41 | 0.42 | Δn/13 | Current invention |
| 5 | TiO₂ + PVA + pol saccharide thickener | 1.90 | H1=78 | SiO₂ + PVA | 1.47 | L1=78 | (H1/L1)¹² | Presence | 0.28 | 0.27 | Δn/14 | Current invention |
| 6 | TiO₂ + PVA | 1.89 | H1=90 | SiO₂ + P A | 1.47 | L1=90 | (H1/L1)¹² | Presence | 0.38 | 0.39 | Δn/14 | Current invention |
| 7 | TiO₂ + PVA | 1.89 | H1=90 | SiO₂ + PVA | 1.47 | L1=90 | (H1/L1)⁶(H2/L8)⁶ | Presence | 0.28 | 0.29 | Δn/11 | Current invention |
| | | | H2=78 | | | L2=78 | | | | | | |
| 3 | TiO₂ + PVA | 1.89 | H1=90 | SiO₂ + PVA | 1.47 | L1=90 | (H1/L1)(H2/L2) (H3/L3)³ | Presence | 0.37 | 0.37 | Δn/12 | Current invention |
| | | | H2=78 | | | L2=78 | | | | | | |
| | | | H3 58 | | | L3=58 | | | | | | |
| 9 | TiO₂ + P n | 1.89 | H1=90 | SiO₂ + PVA | 1.47 | L1=90 | (H1/L1)⁴(H1/L2) | Presence | 0.33 | 0.34 | Δn/7 | Current invention |
| | | | | | | L2-900 | (H1/L1)⁴(H1/L2) | | | | | |
| 10 | TiO₂ + PVA | 1.89 | H1=90 | SiO₂ + P A | 1.47 | L1=90 | (H1/L1)⁴(H1/L2) | Presence | 0.34 | 0.32 | Δn/8 | Current invention |
| | | | | | | L2-1150 | (H1/L1)⁴(H1/L2) | | | | | |
| 11 | TiO₂ + PVA | 1.89 | H1= 90 | SiO₂ + PVA | 1.47 | L1=90 | (H1/L1)⁴(H1/L1) | Presence | 0.37 | 0.37 | Δn/11 | Current invention |
| | | | | | | L2-1230 | (H1/L1)⁴(H1/L2) | | | | | |
| 12 | TiO₂ + PVA | 1.89 | H1=90 | SiO₂ + PVA | 1.47 | L1=90 | (H1/L1)⁴(H1^{/}L2) | Presence | 0.32 | 0.33 | Δn/6 | Current invention |
| | | | | | | L2=700 | (H1/L1)⁴(H1/L2) | | | | | |
| 13 | TiO₂ + PVA | 1.89 | H1=90 | SiO₂ + PVA | 1.47 | L1=90 | (H1/L1)⁴(H1/L2) | Presence | 0.35 | 0.31 | Δn/9 | Current invention |
| | | | | | | L2=620 | (H1/L1)⁴(H1/L2) | | | | | |
| 14 | TiO₂ + PVA | 1.89 | H1=90 | SiO₂ + PVA | 1.47 | L1=90 | (H1/L1) (H1/L2) | Presence | 0.36 | 0.36 | Δn/12 | Current invention |
| | | | | | | L2=590 | (H1/L1)⁴(H1/L2) | | | | | |
| 15 | TiO₂ + UV resin | 1.88 | H1=78 | SiO₂ + U resin | 1.49 | L1=78 | (H1/H1/L1/M1)¹¹ H1/M1/L1 | Absence | 0.37 | 0.38 | Δn/56 | Comparative Example |

| | | | | | | | | | | | | |
|---|---|---|---|---|---|---|---|---|---|---|---|---|
| Δs: Continuity in the change of refractive index | | | | | | | | | | | | |

**[Table 2]**

| No. | Evaluation results | | Remarks |
|---|---|---|---|
| | Mean visible light reflectivity (%) | Unevenness in Reflectivity | |
| 1 | 27 | 5 | Comparative Example |
| 2 | 29 | 5 | Comparative Example |
| 3 | 56 | 4 | Current invention |
| 4 | 53 | 4 | Current invention |
| 5 | 57 | 4 | Current invention |
| 6 | 59 | 4 | Current invention |
| 7 | 64 | 3 | Current invention |
| 8 | 67 | 3 | Current invention |
| 9 | 75 | 1 | Current invention |
| 10 | 73 | 2 | Current invention |
| 11 | 66 | 3 | Current invention |
| 12 | 74 | 1 | Current invention |
| 13 | 76 | 2 | Current invention |
| 14 | 65 | 3 | Current invention |
| 15 | 28 | 5 | Comparative Example |

### Example 2

An optical reflective film (Sample 16) having a structure of (H1/L1)⁶ (H2/L2)³ (H3/L3)³ (H4/L4)²⁴ was formed in the same manner as in Sample 8 in Example 1, except that H4 = 130 nm and L4 = 170 nm were newly added and the layer structure was changed in Sample 8. When the reflectivity was measured, it was found that the mean visible light reflectivity was 31% in the visible light region, the reflection band was also detected in the near infrared region, and thus the present optical reflective film had the reflection characteristic in broad wavelength area of the visible light to the near infrared region. A solar heat gain coefficient, obtained in accordance with JIS R 3106, was 51%, and thus the heat barrier film having a high insulating property only by the reflection band was obtained.

H4/L4 functions as a unit mainly reflecting the near infrared light.

In addition, Sample 17 was produced in which a 8 µm-thick mixed layer (visible light-absorbing layer) of ATO (antimony-doped tin oxide)/polyvinyl alcohol in a volume ratio of 4/6 was formed between the base material and the layer (H4/L4)²⁴, instead of the part of (H1/L1)⁶ (H2/L2)³ (H3/L3)³ of Sample 16. Sample 17 had a solar heat gain coefficient of 51%, which was equal to that in Sample 16. Sample 16 or Sample 17 was bonded to a panel of window glass through an adhesive layer so that the resulting structure is formed panel of window glass/adhesive layer/coating film/base material, and a practical test in which solar radiation was applied thereto was performed. Cracks were generated on the panel of window glass in about 2 months in the case of Sample 17, whereas no damage was observed on the panel of window glass in the case of Sample 16, and thus it was understood that with respect to the visible light part in the current invention, the structure of Sample 16 in which the reflection film having no heat absorption was provided was more excellent in the resistance to cracks by heat.

### Example 3

An optical reflective film was formed in the same manner as in Example 1, except that the layer structure in Sample 9 of Example 1 was changed to a structure of ((H1/L1⁴⁴ (H1/L2) (H1/L1)⁴ (H1/L2))¹⁰. The obtained film was an optical reflective film having a mean visible light reflectivity of 99.5%, and a metallic luster appearance.

## Claims

1. An optical reflective film comprising:
at least one unit in which a high refractive index layer and a low refractive index layer are alternately laminated on a film support, at least one of the high refractive index layer and the low refractive index layer including a water-soluble polymer and a metal oxide particle, wherein
a mixed region of the high refractive index layer and the low refractive index layer is formed between the high refractive index layer and the low refractive index layer by a simultaneous multilayer coating of the high refractive index layer and the low refractive index layer, and the optical reflective film has at least one region in visible light wavelength regions and 30% or more and 100% or less of a mean reflectivity thereof.

2. The optical reflective film as claimed in Claim 1, wherein at least one of the high refractive index layer and the low refractive index layer includes a layer of a dry film thickness of 600 nm or more and 1200 nm or less.

3. The optical reflective film as claimed in Claim 1 or 2, wherein the optical reflective film has two or more units in which the high refractive index layer and the low refractive index layer are alternately laminated and which have an optical film thickness different from others.

4. The optical reflective film as claimed in Claim 3, wherein the two or more units have one or more units which mainly reflect a visible light and one or more units which mainly reflect a near infrared light.

5. The optical reflective film as claimed in any one of Claims 1 to 4, wherein the water-soluble polymer is at least one compound selected from the group consisting of gelatin, polyvinyl alcohol and polysaccharide thickeners.

6. The optical reflective film as claimed in any one of Claims 1 to 5, wherein the metal oxide particle is rutile type titanium dioxide.

7. The optical reflective film as claimed in any one of Claims 1 to 6, wherein the refractive index is continuously changed in the mixed region.
